Europäisches Patentamt

**European Patent Office**

**Office européen des brevets**

(19)

(11) Veröffentlichungsnummer: **0 063 627**
**A1**

(12) **EUROPÄISCHE PATENTANMELDUNG**

(21) Anmeldenummer: **81103193.9**

(22) Anmeldetag: **28.04.81**

(51) Int. Cl.³: **F 16 K 11/20,** F 16 K 11/06,
F 16 K 47/02

(43) Veröffentlichungstag der Anmeldung: **03.11.82**
**Patentblatt 82/44**

(84) Benannte Vertragsstaaten: **AT BE CH DE FR GB IT LI LU
NL SE**

(71) Anmelder: **Rosenthal Technik AG,
Postfach 1508 Wittelsbacherstrasse 49,
D-8672 Selb/Bayern (DE)**
Anmelder: **Emms, Thomas, Marsopstrasse 6b,
D-8000 München 60 (DE)**

(72) Erfinder: **Emms, Thomas, Marsopstrasse 6b,
D-8000 München 60 (DE)**
Erfinder: **Burghardt, Helmut Werner, Hauptstrasse 8,
D-8671 Schönwald (DE)**

(74) Vertreter: **Altenburg, Udo, Dipl.-Phys. et al, Patent- und
Rechtsanwälte Pagenberg - Dost - Altenburg
Galileiplatz 1, D-8000 München 80 (DE)**

(54) **Mischbatterie.**

(57) Bei der Mischbatterie (1) ist die Einrichtung zur Steuerung der Menge des Wasserstroms fest eingestellt und der
Betätigungsgriff (3) nur in einer Richtung zur Steuerung der
Temperatur der fest eingestellten Menge des Wasserstroms
drehbar. Durch rotationsmäßiges Versetzen des Griffes (3)
im Verhältnis zur drehbaren Ventilscheibe (9) ist auch eine
mechanische Einstellung eines festen Temperaturbereichs
möglich. Die Ventilscheiben (7–9) weisen zur Geräuschminderung eine Vielzahl von Bohrungen (30 bis 100 und 110
bis 170) auf. Zur Verbesserung der Gleit- und Verschleißeigenschaften der Ventilscheiben bestehen diese aus einem
Siliziumcarbidmaterial.

EP 0 063 627 A1

Rosenthal Technik AG
8672 Selb/Bayern
Bundesrepublik Deutschland und
Thomas Emms
Marsopstr. 6b
8000 München 60
Bundesrepublik Deutschland

28. April 1981

R 2030 Al/ho

Beschreibung

Mischbatterie

Die Erfindung betrifft eine Mischbatterie mit einer Einrichtung zur Steuerung der Menge und einer Einrichtung zur Steuerung der Temparatur eines Wasserstromes, die aus einer ersten drehbaren Ventilscheibe, die drehfest mit einem mindestens in einer Richtung drehbaren Griff verbunden ist, und aus einer zweiten gehäusefesten Ventilscheibe besteht.

Bei bekannten Mischbatterien dieser Art wird die Menge des Wasserstroms normalerweise durch vertikales Verschwenken des Griffes und die Temperatur durch horizontales Verschwenken des Griffes eingestellt. Bei vielen Anwendungsgebieten werden diese Einstellmöglichkeiten jedoch nicht optimal genutzt, wodurch wertvolle Wasser- und Energiemengen vergeudet werden.

Die Aufgabe der vorliegenden Erfindung besteht darin, eine Mischbatterie der eingangs genannten Art zu schaffen, die besser, d.h. wasser- und energiesparender an bestimmte Anwendungsgebiete anpaßbar ist.

Diese Aufgabe wird bei einer Mischbatterie der eingangs genannten Art gemäß der Erfindung dadurch gelöst, daß die

- 2 -                    0063627

Einrichtung zur Steuerung der Menge des Wasserstromes fest eingestellt ist und daß der Griff nur in einer Richtung zur Steuerung der Temperatur der fest eingestellten Menge des Wasserstroms drehbar ist. Mit Hilfe dieser erfindungsgemäßen Mischbatterie kann in einfacher und wasser- und energiesparender Weise durch eine einzige Bewegung des Griffes eine dem Anwendungszweck entsprechende, fest eingestellte Wassermenge gewünschter Temperatur ausgegeben werden.

Bei einer vorteilhaften Ausgestaltung der Mischbatterie gemäß der Erfindung ist die drehfeste Verbindung zwischen Griff und erster Ventilscheibe axial lösbar und der Griff in Drehrichtung des Griffes relativ zur ersten Ventilscheibe zur mechanischen Einstellung eines festen Temperaturbereichs versetzbar. Durch diese erfindungsgemäße Möglichkeit, den Schwenkbereich des Griffes zu reduzieren, kann ein begrenzter Temperaturbereich bzw. eine feste Temperatur mechanisch eingestellt werden, was jedoch eine im wesentlichen konstante Vorlauftemperatur des heißen Wassers voraussetzt. Durch diese mechanische Einstellung einer bestimmten Temperatur kann weitere Energie gespart werden.

Gemäß einer weiteren Ausgestaltung der vorliegenden Erfindung weist die erste Ventilscheibe in einem nierenförmigen Öffnungsbereich mindestens eine Bohrung, z.B. nierenförmige, kreisförmige, rosettenförmigen oder radial langgestreckte Bohrungen, und/oder die zweite Ventilscheibe in zwei kreisförmigen Öffnungsbereichen mindestens eine Bohrung, z.B. kreisförmige, rosettenförmige oder radial langgestreckte Bohrungen auf. Aufgrund der Aufteilung des Wasserstromes durch diese Bohrungen wird eine erhebliche Geräuschminderung erzielt.

Zum Ausgleich von Ungenauigkeiten von Toleranzmaßen der beiden Ventilscheiben sind diese vorteilhafterweise gemäß der Erfindung auf einer Dichtscheibe gelagert und gegen diese gedrückt.

Zur Verbesserung der Gleit- und Verschleißeigenschaften bestehen die Ventilscheiben gemäß der Erfindung vorteilhafterweise aus einem Siliziumcarbidmaterial, vorzugsweise aus einer porenfreien Mischung von Siliziumcarbid und Silizium, vorzugsweise 70 bis 92 Gew.-% Siliziumcarbid und 8 bis 30 Gew.-% Silizium, wobei das Siliziumcarbidmaterial vorzugsweise im gesinterten Zustand eine Dichte von 2,95 bis 3,05 $g/cm^3$, vorzugsweise eine Oberflächenrauheit von RA 0,1 bis 0,15 $\mu$, vorzugsweise einen Reibungskoeffizienten von 0,1 bis 0,5, vorzugsweise einen E-Modul von 170 000 bis 300 000 $N/mm^2$, vorzugsweise eine Wärmeleitfähigkeit von 0,45 bis 1,0 W/cm K und vorzugsweise einen Ausdehnungskoeffizienten von $4,6x10^{-6}/K$ aufweist.

Die erfindungsgemäßen Ventilscheiben können auch in anderen Mischbatterien eingesetzt werden. Für diese erfindungsgemäßen Ventilscheiben wird daher selbständiger Schutz beansprucht.

Weitere Vorteile, Merkmale und Anwendungsmöglichkeiten der vorliegenden Erfindung ergeben sich aus der nachfolgenden Beschreibung von Ausführungsbeispielen in Verbindung mit der Zeichnung. Darin zeigen:

Fig. 1 einen Längsschnitt durch eine Mischbatterie gemäß der Erfindung,

Fig. 2 eine schematische Darstellung der Ventilscheiben und zugeordneter Elemente zur Erläuterung der Temperatursteuerung,

Fig. 3a bzw. 3b bis 10a bzw. 10 b Querschnitte bzw. Draufsichten auf verschiedene Ausführungsformen der ersten drehbaren Ventilscheibe gemäß der Erfindung und

Fig. 11 bis 17 einen Querschnitt bzw. Draufsichten auf verschiedene Ausführungsformen der zweiten gehäusefesten Ventilscheibe gemäß der Erfindung.

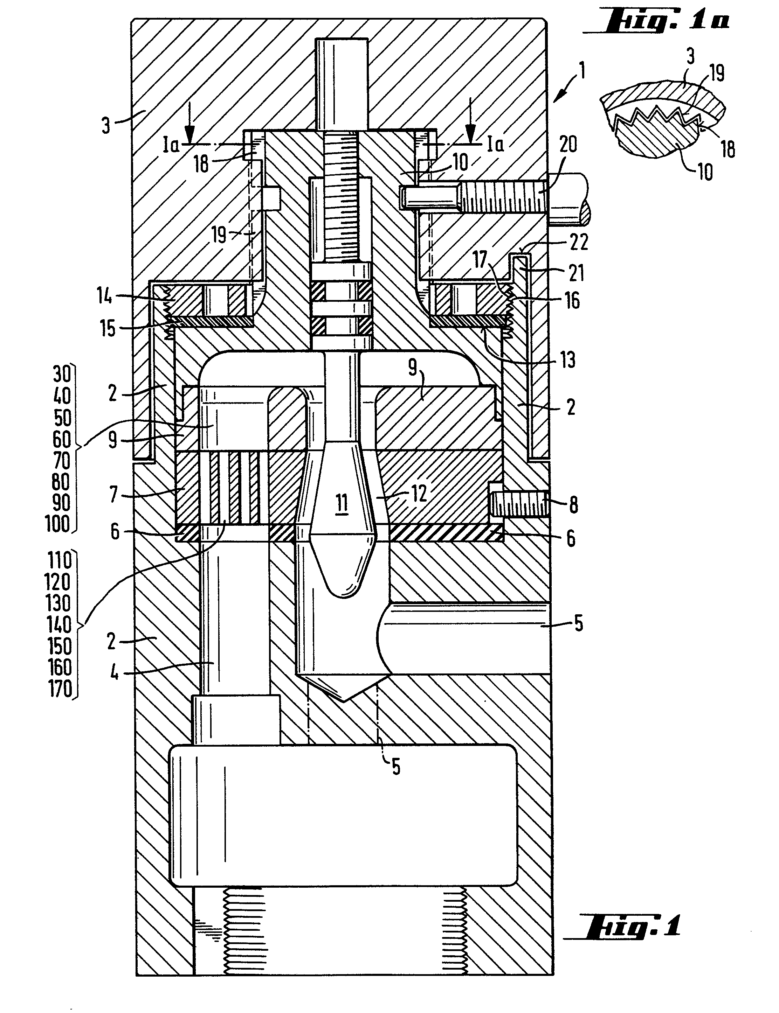

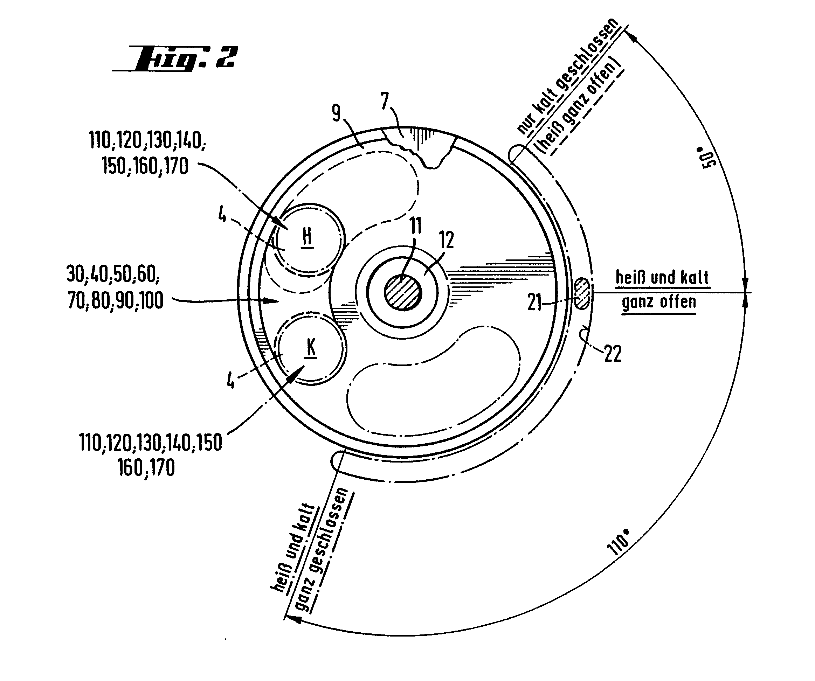

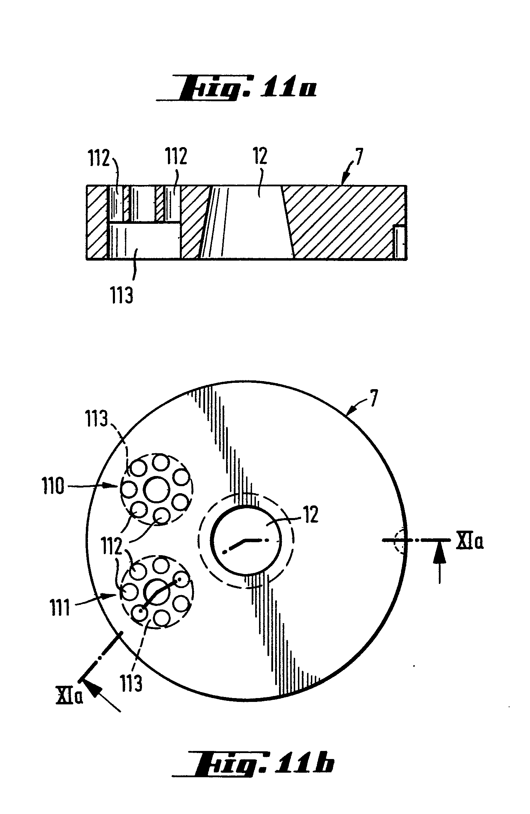

In Fig. 1 ist eine Mischbatterie 1 mit einem Gehäuse 2 und einem Griff 3 dargestellt. Im Gehäuse 2 sind zwei Einlaßbohrungen (vgl. auch Fig. 2) für heißes und kaltes Wasser, von denen in Fig. 1 nur eine Bohrung 4 gezeigt ist, und eine horizontale Auslaßbohrung 5 vorgesehen. Die Auslaßbohrung kann auch vertikal angeordnet sein. Auf einer Dichtscheibe 6, vorzugsweise aus Hartgummi, ist eine Ventilscheibe 7 (in den Ansprüchen zweite Ventilscheibe genannt) angeordnet, die z.B. durch einen Stift 8 fest mit dem Gehäuse 2 verbunden ist. Verschiedene Ausführungsformen dieser Ventilscheibe 7 sind in den Fig. 11 bis 17 dargestellt.

Über der Ventilscheibe 7 ist eine weitere drehbare Ventilscheibe 9 (in den Ansprüchen erste Ventilscheibe genannt) zur Ausbildung eines Zweischeibenventils angeordnet. Die Ventilscheibe 9 ist an ihrem oberen Ende an der Unterseite eines Aufnahmekörpers 10 befestigt, z.B. durch Klebung. Im Aufnahmekörper 10 ist mittig ein fest eingestellter Ventilkegel 11 aufgenommen. Durch axiale Verstellung dieses Ventilkegels 11, welche nur im auseinandergenommenen Zustand der Mischbatterie 1 erfolgen kann, kann in Verbindung mit der konischen Bohrung 12 in der unteren gehäusefesten Ventilscheibe 7 die Menge des Wasserstroms verändert werden.

Gegen einen Absatz 13 des Aufnahmekörpers 10 drückt eine Mutter 14 unter Zwischenschaltung einer z.B. aus Polytetrafluoräthylen bestehenden Gleitscheibe 15. Die Mutter 14 steht über ein Außengewinde 16 in Schraubverbindung mit einem Innengewinde 17 am Gehäuse 2. Hierdurch werden die Ventilscheiben 7 und 9 auf die Dichtscheibe 6 gedrückt.

Der Aufnahmekörper 10 weist eine Außenrändelung 18 auf, die mit einer Innenrändelung 19 des Griffes 3 drehfest in Eingriff steht. Eine axiale Verschiebung des Griffes 3 relativ zum Aufnahmekörper 10 wird durch einen entfernbaren Bolzen 20 verhindert.

Ein kurzer stabförmiger Ansatz 21 des Gehäuses 2 ragt in eine entsprechende ringförmige Nut 22 hinein, wie sich auch aus Fig. 2 ergibt. Durch rotationsmäßiges Versetzen des Griffes 3 im Verhältnis zum Aufnahmekörper 10 nach Entfernen des Bolzen 20 kann der durch den Ansatz 21 beschränkte Schwenkbereich des Griffes 3 und damit der Ventilscheibe 9 reduziert werden, wodurch eine mechanische Einstellung eines bestimmten Temperaturbereichs bzw. einer bestimmten Temperatur möglich ist.

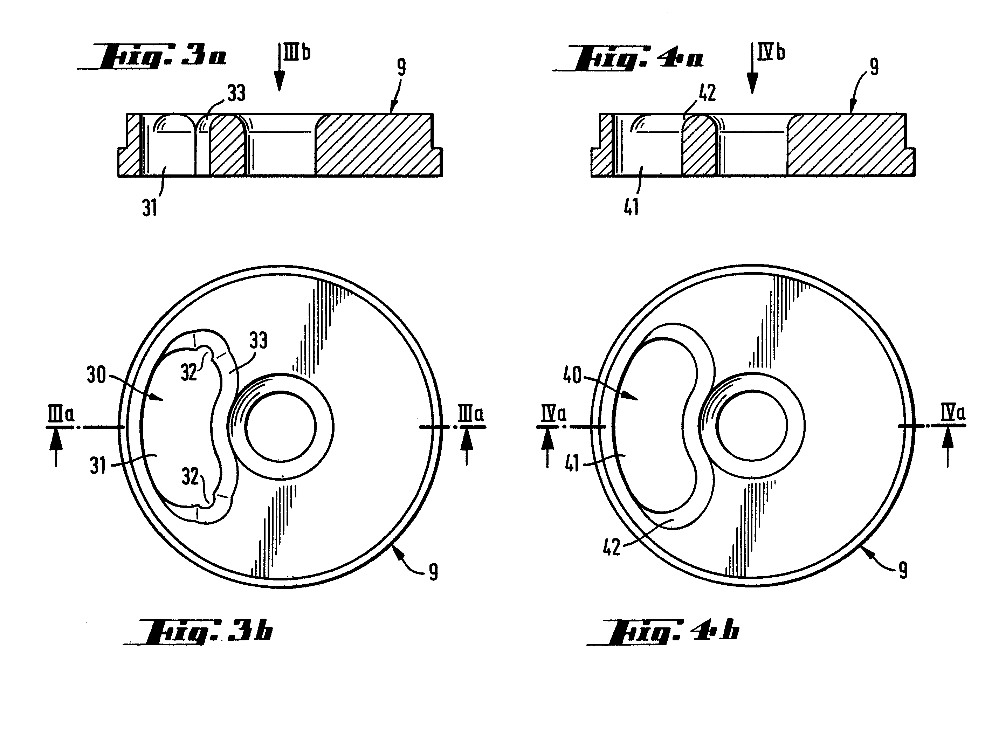

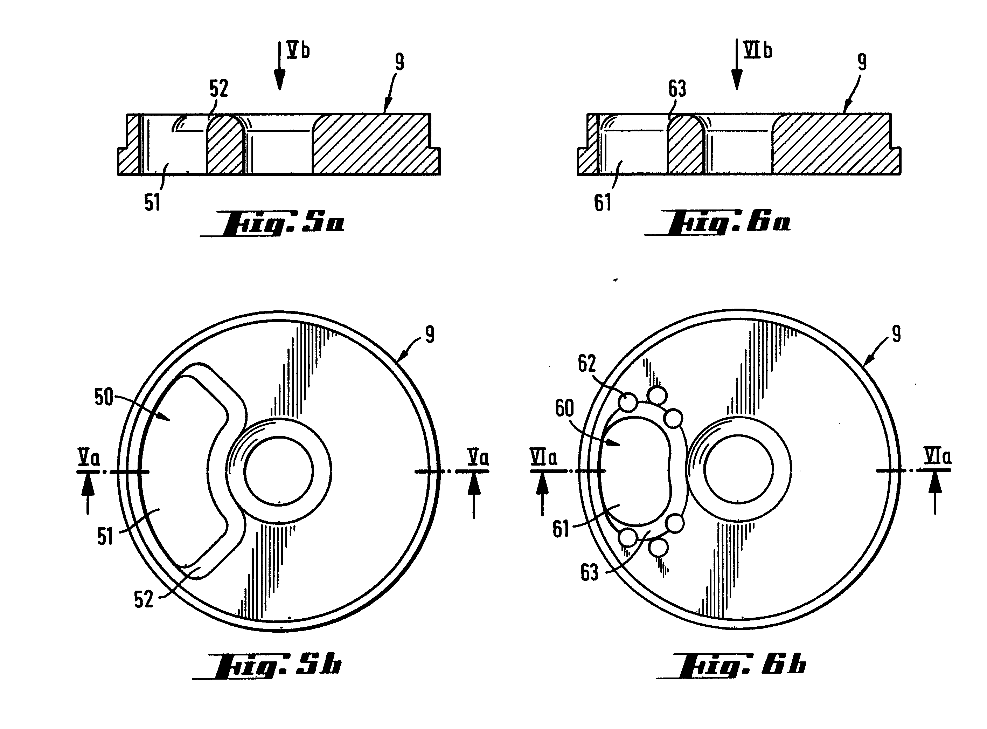

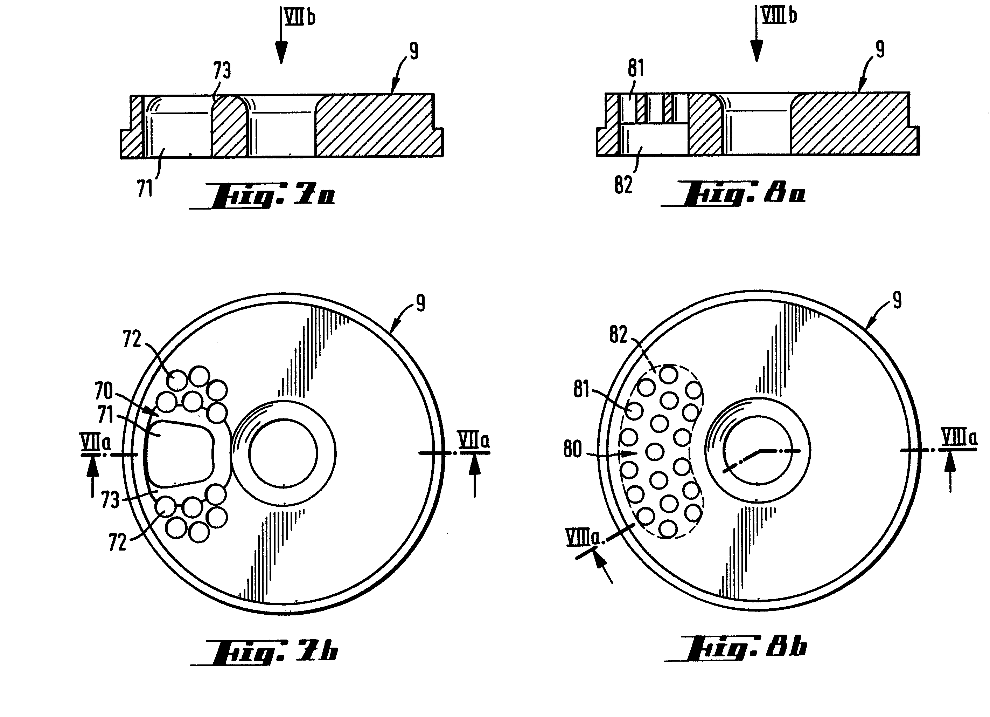

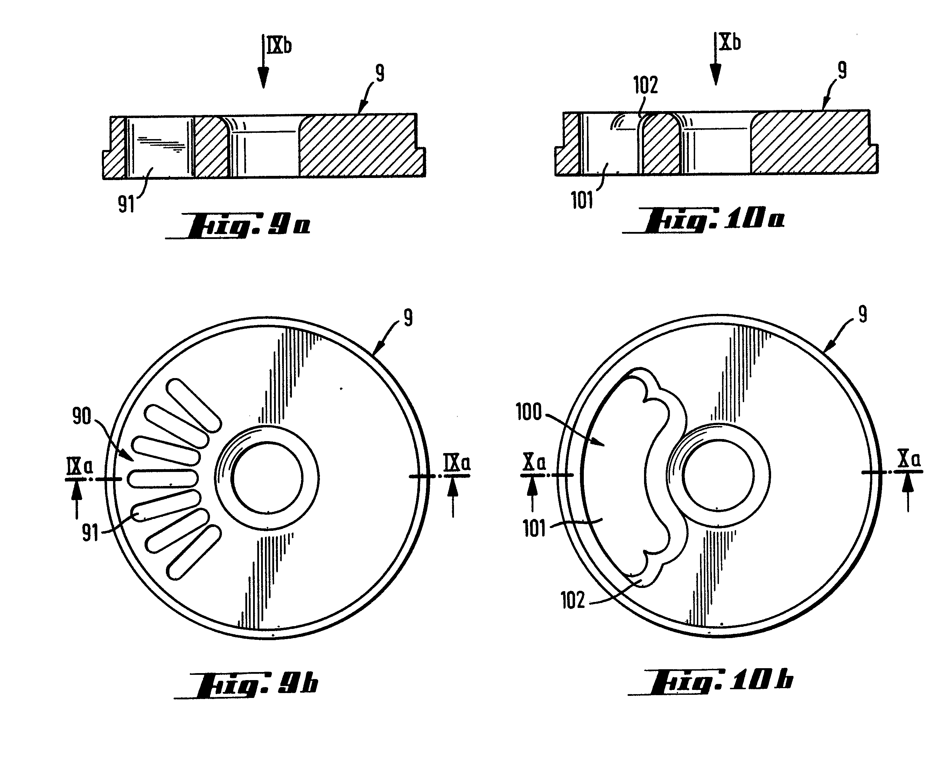

In den Fig. 3 bis 10 sind verschiedene Ausführungsformen der drehbaren Ventilscheibe 9 dargestellt. Hierbei sind in den nierenförmigen Öffnungsbereichen 30,40,50,60,70, 80,90 und 100 jeweils eine nierenförmige Bohrung 31 mit halbkreisförmigen Ansätzen 32 (Fig. 3), eine nierenförmige Bohrung 41 (Fig. 4), eine nierenförmige Bohrung 51 (Fig. 5), eine nierenförmige Bohrung 61 mit zusätzlichen kreisförmigen Bohrungen 62 (Fig. 6), eine viereckförmige Bohrung 71 mit kreisförmigen Bohrungen 72 (Fig. 7), kreisförmige Bohrungen 81, die z.B. auf halber Tiefe der Ventilscheibe in eine einheitlich nierenförmige Bohrung 82 münden (Fig. 8), radial langgestreckte Bohrungen 91 (Fig. 9) und eine am Rand rosettenförmig ausgebildete nierenförmige Bohrung 101 (Fig. 10) vorgesehen. Durch die Vielzahl der Bohrungen wird die Wasserströmung aufgeteilt und hierdurch eine Geräuschminderung erzielt. Die Geräuschminderung kann zusätzlich durch Abschrägungen oder ähnliche Konturen 33 (Fig. 3), 42 (Fig. 4), 52 (Fig. 5), 63 (Fig. 6), 73 (Fig. 7) und 102 (Fig. 10) der nierenförmigen Bohrungen verstärkt werden. Hierdurch wird auch der Rückstau vermindert.

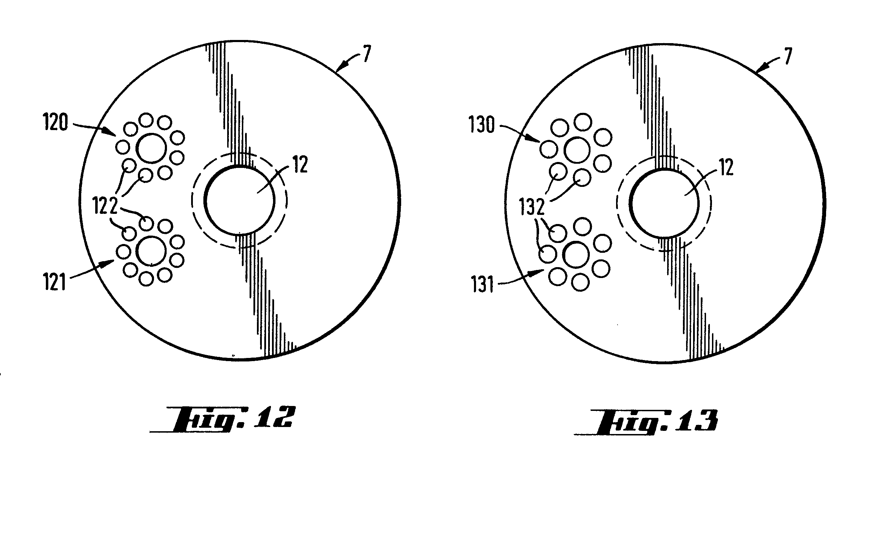

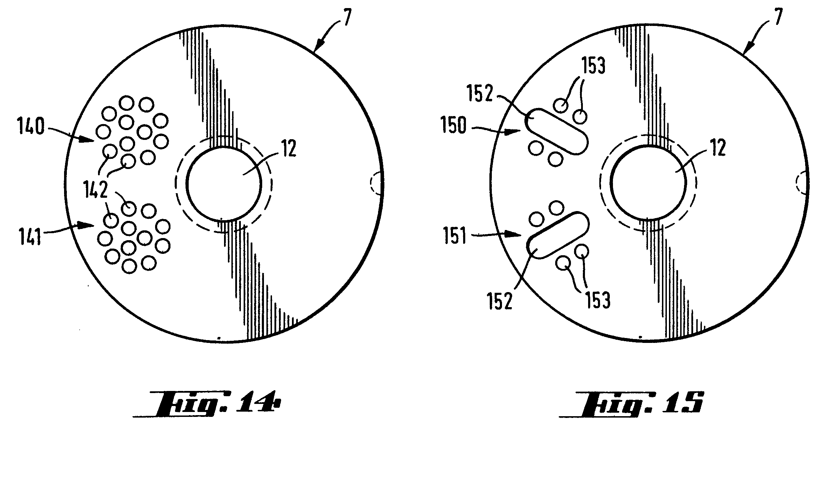

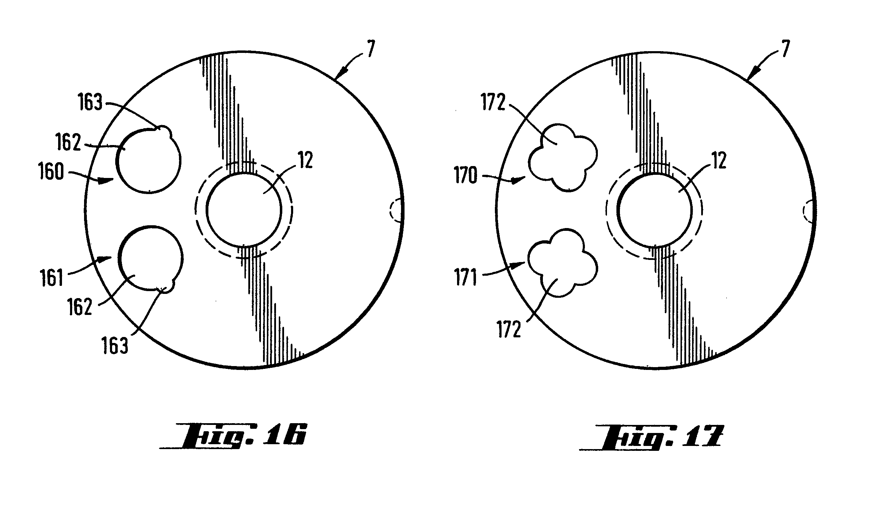

In den Fig. 11 bis 17 sind verschiedene Ausführungsformen der Ventilscheibe 7 dargestellt. Hierbei sind jeweils in den beiden kreisförmigen Öffnungsbereichen 110,111 (Fig. 11) 120,121 (Fig. 12), 130, 131 (Fig. 13), 140, 141 (Fig. 14), 150,151 (Fig. 15), 160,161 (Fig. 16), und 170, 171 (Fig. 17) für kaltes und heißes Wasser kreisförmige Bohrungen 112, die z.B. auf halber Tiefe der Ventilscheibe in eine einheitliche Bohrung 113 münden (Fig. 11), 122 (Fig. 12), 132 (Fig. 13), 142 (Fig. 14), eine radial langgestreckte Bohrung 152 und kreisförmige Bohrungen 153 (Fig. 15), eine kreisförmige Bohrung 162 mit halbkreisförmigen Ansätzen 163 (Fig. 16) und eine rosettenförmige Bohrung 172 vorgesehen. Durch die Aufteilung des Wasserstroms mittels einer Vielzahl solcher Bohrungen wird durch die Ventilscheibe 7 ebenfalls eine Geräuschminderung erzielt.

PATENT- UND RECHTSANWÄLTE

RECHTSANWALT

JOCHEN PAGENBERG DR. JUR., LL. M. HARVARD

PATENTANWÄLTE·      0063627

WOLFGANG A. DOST DR., DIPL.-CHEM. ·

UDO W. ALTENBURG DIPL.-PHYS ·

GALILEIPLATZ 1, 8000 MÜNCHEN 80

TELEFON (0 89) 98 66 64

TELEX: (05) 22 791 pad d

CABLE: PADBÜRO MÜNCHEN

DATUM   28. April 1981
R 2030 Al/ho

P a t e n t a n s p r ü c h e

1. Mischbatterie mit einer Einrichtung zur Steuerung der Menge und einer Einrichtung zur Steuerung der Temperatur eines Wasserstromes, die aus einer ersten drehbaren Ventilscheibe, die drehfest mit einem mindestens in einer Richtung drehbaren Griff verbunden ist, und aus einer zweiten gehäusefesten Ventilscheibe besteht, dadurch gekennzeichnet, daß die Einrichtung (11) zur Steuerung der Menge des Wasserstromes fest eingestellt ist und daß der Griff (3) nur in einer Richtung zur Steuerung der Temperatur der fest eingestellten Menge des Wasserstroms drehbar ist.

2.) Mischbatterie nach Anspruch 1, dadurch gekennzeichnet, daß die drehfeste Verbindung zwischen Griff (3) und erster Ventilscheibe (9) axial lösbar und der Griff in Drehrichtung des Griffes relativ zur ersten Ventilscheibe zur mechanischen Einstellung eines festen Temperaturbereichs versetzbar ist.

3.) Mischbatterie nach Anspruch 2, dadurch gekennzeichnet, daß der Griff (3) eine zylindrische Innenrändelung (19) aufweist, die mit einer zylindrischen Außenrändelung (18) eines Aufnahmekörpers (10), mit dem die erste Ventilscheibe (9) fest verbunden, vorzugsweise verklebt ist, drehfest und axial lösbar in Eingriff steht.

4. Mischbatterie nach mindestens einem der Ansprüche 1 bis 3, dadurch gekennzeichnet, daß die erste Ventilscheibe (9) in einem nierenförmigen Öffnungsbereich (30;40;50;60;70;80; 90;100) mindestens eine Bohrung, z.B. nierenförmige, kreisförmige, rosettenförmige oder radial langgestreckte Bohrungen (31,32;41;51;61,62;71,72;81,82;91;101) aufweist.

5.) Mischbatterie nach Anspruch 4, dadurch gekennzeichnet, daß ein Teil der Bohrungen (31,41,51,61,71,101) Abschrägungen oder ähnliche Konturen (33,42,52,63,73,102) relativ zur axialen Richtung der Ventilscheibe (9) aufweist.

6.) Mischbatterie nach mindestens einem der Ansprüche 1 bis 5, dadurch gekennzeichnet, daß die zweite gehäusefeste Ventilscheibe (7) in zwei kreisförmigen Öffnungsbereichen (110,111;120,121;130,131;140,141;150,151;160,161;170,171) mindestens eine Bohrung, z.B. kreisförmige, rosettenförmige oder radial langgestreckte Bohrungen (112,113;122;132;142; 152,153;162,163;172) aufweist.

7.) Mischbatterie nach mindestens einem der Ansprüche 4 bis 6, dadurch gekennzeichnet, daß die Bohrungen (81,82;112, 113) in axialer Richtung unterschiedliche Querschnitte aufweisen.

8.) Mischbatterie nach mindestens einem der Ansprüche 1 bis 7, dadurch gekennzeichnet, daß die beiden Ventilscheiben (7,9) auf einer Dichtscheibe (6), vorzugsweise aus Hartgummi, gelagert und gegen die Dichtscheibe gedrückt sind.

9.) Mischbatterie nach mindestens einem der Ansprüche 1 bis 8, dadurch gekennzeichnet, daß die Ventilscheiben (7,9) aus einem Siliziumcarbidmaterial, vorzugsweise aus einer porenfreien Mischung von Siliziumcarbid und Silzium, vorzugsweise 70 bis 92 Gew.-% Siliziumcarbid und 8 bis 30 Gew.-% Silizium bestehen, wobei das Siliziumcarbidmaterial vorzugsweise im gesinterten Zustand eine Dichte von 2,95 bis 3,05 g/cm$^3$, vorzugsweise eine Oberflächenrauheit von Ra 0,1 bis 0,15 μ,

vorzugsweise einen Reibungskoeffizienten von 0,1 bis 0,5, vorzugsweise einen E-Modul von 170 000 bis 300 000 $N/mm^2$, vorzugsweise eine Wärmeleitfähigkeit von 0,45 bis 1,0 W/cm K und vorzugsweise einen Ausdehnungskoeffizienten von 4,6 $x10^{-6}/K$ aufweist.

10.) Ventilscheibe für Mischbatterien, dadurch gekennzeichnet, daß die Ventilscheiben (7,9) nach mindestens einem der Ansprüche 4, 5, 6, 7 und 9 ausgebildet sind.

0063627

**Fig. 1a**

**Fig. 1**

**Fig. 2**

50°

nur kalt geschlossen
(heiß ganz offen)

heiß und kalt
ganz offen

110°

heiß und kalt
ganz geschlossen

22
21
12
11
7
9
H
K

110,120,130,140;
150,160,170

30,40,50,60;
70,80,90,100

110,120,130,140,150
160,170

Fig. 3a

IIIb

9

33

31

Fig. 4a

IVb

9

42

41

IIIa    30    32    33    IIIa

31    32    9

Fig. 3b

IVa    40    IVa

41

42    9

Fig. 4b

3/10

0063627

**Fig. 5a**

52 Vb 9

51

**Fig. 6a**

63 VIb 9

61

**Fig. 5b**

9

50

Va · — · — · — Va

51

52

**Fig. 6b**

9

62

60

VIa · — · — · — VIa

61

63

0063627

Fig. 8a

Fig. 8b

Fig. 7a

Fig. 7b

VIIIb

VIIIa

VIIa

9

81

82

80

73

71

72

70

IXb

9

91

Fig. 9a

Xb

102

9

101

Fig. 10a

9

90

91

IXa        IXa

Fig. 9b

9

100

101

102

Xa        Xa

Fig. 10b

*Fig. 11a*

*Fig. 11b*

**Fig. 12**

**Fig. 13**

0063627

*Fig. 15*

*Fig. 14*

**Fig. 16**

**Fig. 17**

Europäisches
Patentamt

**EUROPÄISCHER RECHERCHENBERICHT**

0063627
Nummer der Anmeldung

EP 81 10 3193

| Kategorie | EINSCHLÄGIGE DOKUMENTE | | KLASSIFIKATION DER ANMELDUNG (Int. Cl.⁴) |
|---|---|---|---|
| | Kennzeichnung des Dokuments mit Angabe, soweit erforderlich, der maßgeblichen Teile | betrifft Anspruch | |
| | DE - B - 1 282 395 (GENIN)  <br> * Spalte 5, Zeile 39 bis Spalte 6, Zeile 4; Patentanspruch 1; Abbildungen *  <br> --- | 1 | F 16 K 11/20 <br> 11/06 <br> 47/02 |
| | GB - A - 1 462 765 (WATTS)  <br> * Seite 3, Zeilen 6-39; Seite 3, Zeile 127 bis Seite 5, Zeile 30; Abbildungen 4,8,9,10,11 *  <br> --- | 1 | |
| A | DE - A - 2 845 581 (HANSA METALL-WERKE)  <br> * Patentanspruch 1; Abbildungen *  <br> --- | | **RECHERCHIERTE SACHGEBIETE (Int. Cl.³)** <br><br> F 16 K |
| A | DE - A - 2 937 475 (HANSA METALL-WERKE  <br> * Patentanspruch 1; Abbildungen *  <br> --- | | |
| A | FR - A - 2 301 753 (ATLAS COPCO A.B.)  <br> * Abbildung 3 *  <br> --- | | |
| A | GB - A - 1 343 100 (MASAO NOZAWA)  <br> * Abbildung 4 *  <br><br> -------- | | **KATEGORIE DER GENANNTEN DOKUMENTE** <br><br> X: von besonderer Bedeutung allein betrachtet <br> Y: von besonderer Bedeutung in Verbindung mit einer anderen Veröffentlichung derselben Kategorie <br> A: technologischer Hintergrund <br> O: nichtschriftliche Offenbarung <br> P: Zwischenliteratur <br> T: der Erfindung zugrunde liegende Theorien oder Grundsätze <br> E: älteres Patentdokument, das jedoch erst am oder nach dem Anmeldedatum veröffentlicht worden ist <br> D: in der Anmeldung angeführtes Dokument <br> L: aus andern Gründen angeführtes Dokument <br><br> &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 16.12.1981 | VAN REETH |

EPA form 1503.1   06.78